# FASCICULE DE BREVET EUROPEEN

(11) **EP 1 636 292 B1**
(45) Date de publication et mention de la délivrance du brevet: **25.06.2008**
(21) Numéro de dépôt: 04767411.4
(22) Date de dépôt: 22.06.2004
(51) Int. Cl.: C08G 69/28, C08J 3/12

(54) **PROCEDE DE PREPARATION DE PARTICULES SPHERIQUES A BASE DE POLYAMIDE.**
VERFAHREN ZUR HERSTELLUNG VON SPHÄRISCHEN PARTIKELN AUF BASIS VON POLYAMID
METHOD FOR PRODUCTION OF SPHERICAL PARTICLES MADE FROM POLYAMIDE

(30) Priorité: 26.06.2003 FR 0307719
(43) Date de publication de la demande: 22.03.2006
(73) Titulaire: RHODIA POLYAMIDE INTERMEDIATES, 69192 Saint-Fons (FR)
(72) Inventeur: HELFT, Matthieu, 69600 Oullins (FR); ROCHE, Eric, F-38200 LUZINAY (FR)
(74) Mandataire: Esson, Jean-Pierre
(86) Numéro de dépôt international: PCT/FR2004/001555
(87) Numéro de publication internationale: WO 2005/000456

(56) Documents cités:
- EP-A- 0 866 088
- WO-A-99/43407
- FR-A- 2 642 079
- US-A- 4 069 184

## Description

L'invention concerne un procédé de préparation de particules sphériques à base de polyamide de diamètre moyen inférieur à 1 mm, de préférence inférieur à 100 µm. Le procédé de l'invention comprend plus particulièrement une étape de dispersion des monomères dans un liquide inerte, et une étape de polymérisation des monomères.

Le polyamide sous forme de poudre, c'est-à-dire sous la forme de particules sphériques de diamètre généralement inférieur à 1 mm, de préférence inférieur à 100 µm présente un intérêt pour de nombreuses applications. En effet des poudres de polyamide sont utilisées notamment comme additif dans les peintures, par exemple dans les peintures pour revêtement des planchers de salles de sports qui présentent ainsi des propriétés antidérapantes. Les poudres polyamide sont également introduites dans des produits cosmétiques telles que les crèmes solaires, soins du corps ou du visage et démaquillants. Elles sont également utilisées dans le domaine des encres et papiers.

Différents procédés d'obtention de poudres de polyamide sont connus de l'homme du métier.

Des poudres de polyamide peuvent être obtenues par exemple par broyage ou cryo-broyage de granulés de polyamide de diamètre moyen initial de l'ordre de 3 mm. Néanmoins ces transformations mécaniques par réduction de taille aboutissent souvent à des particules de forme irrégulière et de taille rarement inférieure à 100 µm. La distribution de taille de ces particules est souvent large et ces dernières peuvent difficilement être mises en oeuvre à l'échelle industrielle.

Il est également connu de préparer des poudres de polyamide par dissolution de polyamide dans un solvant puis reprécipitation. Les solvants du polyamide étant très corrosifs et volatiles, les conditions de sécurité sont strictes et ce procédé ne peut être mis en oeuvre à une échelle industrielle.

D'autres procédés existent, selon lesquelles les poudres de polyamide sont préparées *in situ* lors de la polymérisation des monomères du polyamide.

Par exemple, il est connu d'obtenir des poudres polyamide par polymérisation anionique de lactames en solution. La polymérisation est réalisée en présence des monomères, d'un solvant des monomères, d'un initiateur, d'un catalyseur, d'un activateur et la polymérisation est réalisée sous agitation à une température voisine de 110°C. Ce procédé est spécifique aux polyamides obtenus à partir de monomères de type lactames. Il est peu flexible et ne permet pas de diversifier la nature des poudres de polyamide en fonction des propriétés finales de la poudre recherchées, en faisant varier la nature des monomères par exemple. Il est également connu d'obtenir des poudres de copolyesteramide par polymérisation anionique de lactames et de lactones. Ces procédés par voie polymérisation anionique sont difficiles à maîtriser du fait de la grande réactivité de la voie anionique notamment.

Il est également connu de préparer des dispersions stables de polyamide par émulsion des monomères dans un milieu inerte dans lequel au moins un monomère et le polyamide formé sont insolubles, à l'aide d'agents émulsifiants. L'utilisation d'agents émulsifiants pour préparer la dispersion peut présenter un inconvénient si ces agents sont encore présents dans la poudre finale, après séparation de la poudre du milieu. De plus, il n'est pas évident de séparer les agents émulsifiants, de la poudre. En effet les agents émulsifiants, par exemple des copolymères blocs, peuvent présenter une certaine affinité avec le polyamide. Ils peuvent également être éventuellement réactifs avec le polyamide et donc être liés au final au polyamide.

La présente invention propose un procédé de préparation de particules sphériques à base de polyamide, ne présentant pas ces inconvénients. Il s'agit d'un procédé de préparation de particules sphériques à base de polyamide de diamètre moyen inférieur à 1 mm, de préférence inférieur à 100 µm comprenant les étapes suivantes :
a) réaliser une dispersion d'un premier liquide comprenant des monomères du polyamide, dans un deuxième liquide inerte
b) polymériser les monomères par polycondensation et/ou polyaddition par chauffage du milieu réactionnel et maintien du chauffage à une température inférieure à la température de fusion du polyamide de degré de polymérisation souhaité
c) éventuellement décomprimer le milieu réactionnel jusqu'à la pression atmosphérique
d) éventuellement refroidir progressivement le milieu réactionnel
e) récupérer les particules phériques à base de polyamide

Ce procédé met notamment en oeuvre des températures modérées, ce qui permet d'éviter d'éventuelles dégradations du polyamide telles que des réactions de décarboxylation ou des réactions de branchement.

Ce procédé permet également d'obtenir des particules sphériques présentant une distribution de taille satisfaisante.

Par particule sphérique, on entend une particule de forme essentiellement sphérique.

Par disperser on entend par exemple émulsionner ou suspendre.

Par milieu réactionnel dans le cadre de l'invention, on entend le milieu contenu dans le réacteur. Il s'agit généralement de l'ensemble du premier liquide et du deuxième liquide. Il s'agit d'un milieu biphasique comprenant une phase continue formée par le deuxième liquide, et une phase dispersée formée par le premier liquide

Par monomères, on entend également des oligomères obtenus par polymérisation des monomères.

Par diamètre moyen, on entend la valeur sur laquelle la distribution de la taille des particules est centrée.

Le procédé de l'invention est généralement mis en oeuvre dans un réacteur, par exemple dans un réacteur de forme cylindrique vertical.

L'étape a) est généralement réalisée sous agitation, par exemple sous agitation mécanique. On peut citer comme exemple d'agitateur pouvant être utilisé dans le cadre de l'invention une turbine Rushton à pales droites. Certains paramètres concernant l'agitation peuvent jouer un rôle pour l'obtention d'une dispersion stable et donc pour l'obtention de particules présentant le diamètre souhaité. Ces paramètres ont été étudiés notamment dans un article de Calabrese et al., « Drop Breakup in Turbulent Stirred-Tank Contactors », AIChE Journal, 32, 657 (Avril 1986). Par exemple le rapport entre le diamètre du module d'agitation et le diamètre du réacteur peut être déterminant. Il est avantageusement compris entre 0.2 et 0.6, de préférence environ égal à 0.5. Un autre paramètre est le produit de la vitesse d'agitation par la durée d'agitation, pour l'obtention d'une dispersion stable. De préférence ce produit est supérieur à 3800. La vitesse d'agitation et la durée d'agitation peuvent être variables. La vitesse d'agitation est adaptée notamment en fonction du diamètre de particules souhaité. La durée d'agitation doit être suffisamment longue pour stabiliser mécaniquement la dispersion.

Selon un mode de réalisation particulier du procédé de l'invention, un flux dé gaz inerte est introduit dans le ciel du réacteur au cours de l'étape a) et/ou b). Le gaz inerte est avantageusement choisi parmi l'azote, les gaz rares, les gaz inertes, l'air enrichi en azote, le dioxyde de carbone, et leurs mélanges.

Les polyamides de l'invention sont généralement obtenus à partir de deux monomères différents, ou à partir d'un seul monomère. L'invention s'applique d'une part aux polyamides issus de deux monomères différents, dont le polyamide le plus important est le poly(hexaméthylène adipamide). Bien entendu, ces polyamides peuvent être obtenus à partir d'un mélange de diacides et de diamines. Ainsi, dans le cas du poly(hexaméthylène adipamide), les monomères principaux sont l'hexaméthylène diamine et l'acide adipique. Toutefois, ces monomères peuvent comprendre jusqu'à 25 % en mole d'autres monomères diamines ou diacides ou même des monomères aminoacides ou lactames. L'invention s'applique d'autre part aux polyamides issus d'un seul monomère, dont le polyamide le plus important est le polycaprolactame. Bien entendu, ces polyamides peuvent être obtenus à partir d'un mélange de lactames et/ou aminoacides. Ainsi, dans le cas du polycaprolactame, le monomère principal est le caprolactame. Toutefois, ces monomères peuvent comprendre jusqu'à 25 % en mole d'autres monomères aminoacides ou lactames ou même des monomères diamines ou diacides.

Les polyamides de type « AABB » issus de deux monomères différents sont généralement fabriqués en utilisant comme matière première, un sel obtenu par mélange en quantité stoechiométrique en général dans un solvant comme l'eau d'un diacide avec une diamine.

Ainsi, dans la fabrication du poly(hexaméthylène adipamide), l'acide adipique est mélangé avec de l'hexaméthylène diamine généralement dans de l'eau pour obtenir un adipate d'hexaméthylène diamine plus connu sous le nom de sel Nylon.

La solution de sel Nylon est éventuellement concentrée par évaporation partielle ou totale de l'eau.

Les polyamides de type « AB » issus d'un seul monomère sont généralement fabriqués en utilisant comme matière première, un lactame et/ou un aminoacide, et une faible quantité d'eau ou d'un autre initiateur; la proportion en poids de l'eau est généralement comprise entre 1 et 30%.

Par acide, on entend les acides carboxyliques et leurs dérivés, tels que les anhydrides d'acide, les chlorures d'acide, les esters etc. Par aminé, on entend les amines et leurs dérivés.

Les monomères du polyamide de l'invention peuvent donc être des lactames, des aminoacides, des diamines ou diacides, du sel Nylon, des mélanges de ces différents composés. Ces monomères peuvent être des composés linéaires, aromatiques aliphatiques, cycloaliphatiques ou arylaliphatiques. D'autres monomères peuvent également être ajoutés, tels que des composés multifonctionnels, c'est-à-dire présentant au moins trois fonctions acide ou amine. On peut citer à titre de monomères multifonctionnels les composés présentant trois fonctions acide ou trois fonctions amine, et les composés comprenant deux fonctions acide et une fonction amine, ou deux fonctions acide et une fonction amine.

Les monomères lactames ou aminoacides peuvent par exemple être choisis parmi le caprolactame, l'acide 6-aminohexanoïque ; l'acide 5-aminopentanoïque, l'acide 7-aminoheptanoïque. Le lactame préféré est le caprolactame.

Les monomères acides dicarboxyliques peuvent par exemple être choisis parmi l'acide glutarique, l'acide adipique, l'acide subérique, l'acide sébacique, l'acide dodécanedioïque ; l'acide 1,2-ou 1,3-cyclohexane dicarboxylique ; l'acide 1,2-ou 1,3-phénylène diacétique ; l'acide 1,2-ou 1,3-cylohexane diacétique ; l'acide isophthalique ; l'acide téréphthalique ; le 4,4'-oxybis(acide benzoïque); l'acide 4,4'-benzophénone dicarboxylique ; l'acide 2,5-naphthalène dicarboxylique; et l'acide p-t-butyl isophthalique. Il peut s'agir d'acide adipique comprenant des sous-produits issus de la fabrication d'acide adipique, par exemple un mélange d'acide adipique, d'acide glutarique et d'acide succinique. L'acide dicarboxylique préféré est l'acide adipique.

Les monomères diamines peuvent par exemple être choisis parmi l'hexaméthylène diamine ; la 2-méthyl pentaméthylène diamine ; la 2-méthyl hexaméthylène diamine ; la 3-méthyl hexa-méthylène diamine ; la 2,5-diméthyl hexaméthylène diamine ; la 2,2-diméthylpentaméthylène diamine ; la 5-méthylnonane diamine ; la dodécaméthylène diamine ; la 2,2,4-et 2,4,4-triméthyl hexaméthylène diamine ; la 2,2,7,7-tétraméthyl octaméthylène diamine ; la méta-xylylène diamine ; la paraxylylène diamine ; le diaminodicyclohexyl méthane et les diamines aliphatiques en C2 -C16 qui peuvent être substituées par un ou plusieurs groupements alkyles. La diamine préférée est l'hexaméthylène diamine.

Le polyamide de l'invention peut également être un polymère comprenant, outre des monomères de type aminoacide, lactame, acide carboxylique, ou amine, d'autres monomères de nature différente. Comme exemple de tels monomères, on peut citer par exemple des alcools, tels que des diols, des diisocyanates etc... On peut citer à titre d'exemple d'alcool, le glycol. Le polyamide de l'invention peut par exemple être un copolyesteramide.

Le polyamide de l'invention est obtenu par polycondensation et/ou polyaddition. Lorsque le polyamide est obtenu par polycondensation, les liens entre les monomères qui forment le polymère impliquent des atomes autres que des atomes de carbone et un sous-produit de faible poids moléculaire -généralement de l'eau- est co-généré lors de la réaction de polymérisation.

Selon un mode de réalisation particulier du procédé de l'invention, le premier liquide est constitué de monomères du polyamide.

Le premier liquide de l'étape a) peut comprendre des monomères fondus ou une solution de monomères dans un solvant.

Lorsque le premier liquide comprend des monomères fondus, il peut être obtenu par exemple par fusion de sel Nylon, ou par fusion de caprolactame, ou par fusion d'un mélange des monomères. Le premier liquide peut être obtenu avant son introduction dans le milieu réactionnel, ou directement dans le milieu réactionnel. Ainsi on peut par exemple introduire les monomères sous forme solide dans le milieu réactionnel, puis fondre les monomères dans le milieu réactionnel.

Lorsque le premier liquide comprend une solution de monomères dans un solvant, il peut être obtenu par dissolution des monomères dans un solvant, tel que l'eau ou le glycol. Par exemple le premier liquide peut être une solution de sel Nylon dans l'eau.

Lorsque le premier liquide comprend une solution de monomères dans un solvant, la quantité de monomères est avantageusement supérieure ou égale à 25% en poids dans le premier liquide.

Le premier liquide peut contenir, outre des monomères du polyamide, des additifs tels que des pigments, par exemple du dioxyde de titane, des charges minérales ou organiques sous forme divisée. La taille élémentaire des additifs est de préférence inférieure à la taille des particules sphériques de polyamide de l'invention souhaitée

Le premier liquide peut être obtenu selon toute méthode connue de l'homme du métier.

Le deuxième liquide de l'invention est inerte.

Par « inerte » on entend inerte chimiquement, notamment vis-à-vis de la réaction de polymérisation des monomères.

Le deuxième liquide et le premier liquide sont essentiellement immiscibles.

Par « immiscible » on entend de préférence une solubilité du deuxième liquide dans le premier liquide inférieure à 5% en poids. La limite de solubilité est détectée par ajout progressif sous agitation du deuxième liquide dans le premier liquide, jusqu'à détection d'une séparation de phase des deux liquides.

Le deuxième liquide présente de préférence une température d'ébullition élevée. De préférence la température d'ébullition du deuxième liquide est supérieure à 150°C à pression atmosphérique. La température d'ébullition du deuxième liquide est de préférence supérieure à la température de polymérisation de l'étape b).

Comme deuxième liquide convenable pour la mise en oeuvre de l'invention, on peut citer les composés hydrocarbonés. Ces composés peuvent être issus par exemple d'une coupe d'hydrocarbures aliphatiques possédant un nombre d'atomes de carbone inférieur ou égal à 20. La coupe d'hydrocarbures peut être un produit liquide à pression atmosphérique à la température de polymérisation en phase dispersée. La polymérisation en phase dispersée peut aussi être avantageusement effectuée dans une coupe d'hydrocarbures gazeuse à pression atmosphérique à une température supérieure à 150°C et maintenue à l'état liquide sous pression lors de la polymérisation en phase dispersée.

De préférence le deuxième liquide est un hydrocarbure aliphatique ou un mélange d' hydrocarbures aliphatiques. On peut citer comme exemple d'hydrocarbure pouvant être utilisé dans le cadre de l'invention le dodécane, le décane etc. Une coupe commercialisée par la société Shell Chemicals sous la référence Shellsol ® D100 peut par exemple être utilisée.

Selon un mode de réalisation particulier du procédé de l'invention, le milieu réactionnel est dépourvu d'agent de stabilisation de dispersion ou d'agent émulsifiant connus de l'homme du métier. De préférence le milieu réactionnel est dépourvu d'agent tensioactif.

Le deuxième liquide peut comprendre des monomères du polyamide de l'invention, par exemple le deuxième liquide peut comprendre des monomères sous forme solide dispersés dans le deuxième liquide, destiné à former la phase continue de la dispersion.

Le deuxième liquide peut également comprendre des additifs tels que décrits précédemment pour le premier liquide.

Le premier liquide ou un précurseur du premirer liquide -par exemple des monomères sous forme solide- est introduit dans le second liquide ou inversement selon une méthode connue de l'homme du métier.

La température du premier liquide lors de cette introduction est de préférence comprise entre 50 et 150°C.

La température du deuxième liquide lors de cette introduction est de préférence identique à 20°C près à celle du premier liquide.

Le rapport entre le volume du premier liquide et le volume du deuxième liquide mis en oeuvre est de préférence supérieur ou égal à 0.5, de préférence supérieur ou égal à 0.75

La température lors de l'étape a) varie notamment en fonction de la nature des monomères, du fait que le premier liquide est constitué de monomères fondus ou d'une solution de monomères dans un solvant etc. Avantageusement la température lors de l'étape a) est constante pendant toute la durée de l'étape pour assurer une bonne stabilité de la dispersion. La température est choisie de telle sorte que le milieu réactionnel soit maintenu à l'état liquide lors de l'étape a). De préférence la température lors de l'étape a) est comprise entre 50 et 150°C.

La pression lors de l'étape a) est avantageusement constante. Elle est de préférence comprise entre 1 et 5 bars. Elle est choisie de telle sorte que le milieu réactionnel soit maintenu à l'état liquide lors de l'étape a). La pression peut notamment être choisie en fonction de la concentration et de la solubilité des monomères dans le solvant lorsqu'ils sont en solution dans un solvant, de la tension de vapeur des monomère fondus lorsqu'ils ne sont pas en solution dans un solvant.

La température et la pression lors de l'étape b) sont choisies en fonction notamment de la composition du premier liquide, et de telle sorte que la réaction de polymérisation entre les monomères ait lieu. Lorsque la pression est supérieure à la pression atmosphérique, elle est généralement autogène, et régulée le cas échéant si elle atteint une valeur seuil, par exemple égale à 15 bars. La température lors de l'étape b) est inférieure à la température de fusion du polyamide de degré de polymérisation souhaité.

Par exemple, lorsque le premier liquide est une solution des monomères dans un solvant des monomères, et lorsque le solvant est l'eau, la pression lors de l'étape b) est généralement supérieure à la pression atmosphérique. De préférence la pression lors de l'étape b) est comprise entre 1 et 20 bars.

La température lors de l'étape b) est de préférence supérieure ou égale à 150°C. La température peut varier au cours de l'avancement de la réaction, généralement en augmentant, mais doit toujours rester inférieure à la température de fusion du polyamide de degré de polymérisation souhaité.

Le polyamide final obtenu présente généralement un degré de polymérisation moyen compris entre 2 et 200. Avantageusement le polyamide final est un oligomère de degré de polymérisation moyen compris entre 10 et 30.

L'étape b) de polymérisation peut être mise en oeuvre en présence d'un catalyseur de la polymérisation. Le catalyseur est généralement introduit dans le milieu réactionnel avec les monomères, de préférence avant de réaliser la dispersion de l'étape a).

Selon un mode de réalisation particulier du procédé de l'invention, correspondant notamment au cas où le premier liquide est une solution des monomères dans un solvant des monomères, un azéotrope du deuxième liquide, du solvant des monomères du premier liquide, et du sous-produit de polycondensation est distillé lors de l'étape b). Cette distillation permet notamment par élimination du sous-produit de polycondensation, généralement de l'eau, de favoriser la réaction de polycondensation. La distillation est réalisée selon une méthode connue de l'homme du métier.

L'étape b) est généralement réalisée sous agitation -comme l'étape a)-, afin de conserver la dispersion réalisée à l'étape a) en l'état. Cette agitation favorise notamment le dégazage du sous-produit de polycondensation.

De préférence la durée de l'étape b) est comprise entre 10 et 60 minutes. Cette durée varie en fonction notamment du degré de polymérisation souhaité du polyamide.

Selon un mode de réalisation particulier du procédé de l'invention, correspondant notamment au cas où la pression lors de l'étape b) est supérieure à la pression atmosphérique, le procédé comprend une étape c) de décompression jusqu'à la pression atmosphérique, la température lors de l'étape c) étant inférieure à la température de fusion du polyamide de degré de polymérisation souhaité. La température lors de cette étape c) est de préférence supérieure à 150°C. Cette étape de décompression est réalisée selon une méthode connue de l'homme du métier. La décompression est de préférence progressive afin d'éviter l'agglomération des particules sphériques de polyamide.

Le procédé de l'invention peut également comprendre une étape de finition afin d'atteindre le degré de polymérisation souhaité. La finition peut être réalisée à pression atmosphérique ou réduite. La température lors de la finition est modérée, et de préférence comprise entre 150 et 220°C. La température lors de cette étape de finition est inférieure à la température de fusion du polyamide de degré de polymérisation souhaité.

Selon un mode de réalisation préférentiel du procédé de l'invention, le procédé comprend une étape d) de refroidissement progressif du milieu réactionnel pour éviter l'agglomération des particules. Il peut être réalisé par exemple par ajouts contrôlés de deuxième liquide froid dans le milieu réactionnel. La température à la fin de l'étape d) est de préférence inférieure ou égale à 180°C. L'étape d) est de préférence réalisée sous faible agitation pour maintenir une homogénéité thermique.

Selon un mode de réalisation particulier du procédé de l'invention, l'étape c) de décompression et l'étape d) de refroidissement sont réalisées simultanément.

Le procédé de l'invention comprend une étape e) de récupération des particules sphériques de polyamide. La température lors de l'étape e) est de préférence comprise entre 50 et 180°C.

L'étape e) est une étape au cours de laquelle le produit de la polymérisation en phase dispersée dans un milieu liquide est isolé du milieu de dispersion. L'isolation peut être réalisée par tout moyen permettant de séparer d'une phase liquide une phase solide en suspension. L'isolation peut consister par exemple en une filtration, une décantation, une centrifugation. Si le milieu de dispersion est un milieu liquide constitué d'un composé gazeux à pression atmosphérique liquéfié sous pression, l'isolation peut être effectuée par détente du milieu, par flashage par exemple.

Les particules sphériques de polyamide récupérées sont de préférence ensuite lavées selon une étape f) du procédé de l'invention. Cette étape de lavage permet notamment d'éliminer les éventuelles traces de solvant contenu initialement dans le premier liquide, traces qui peuvent être gênantes pour certaines applications des particules finales.

Les particules sont de préférence ensuite séchées selon une étape g) du procédé de l'invention.

Selon un mode de réalisation particulier du procédé de l'invention, les particules sphériques obtenues présentent un diamètre moyen inférieur ou égal à 100 µm

Avantageusement les particules obtenues selon le procédé de l'invention présentent un diamètre moyen inférieur ou égal à 30 µm. De préférence elles présentent un diamètre moyen inférieur ou égal à 10 µm, encore plus préférentiellement inférieur ou égal à 5 µm. La distribution de taille des particules est généralement déterminée par granulométrie laser selon une méthode connue de l'homme du métier.

Selon un mode de réalisation particulier de l'invention, les étapes a) à g) sont successives.

D'autres détails ou avantages de l'invention apparaîtront plus clairement à la vue des exemples donnés ci-dessous, qui ne constituent pas une limitation à l'invention.

### EXEMPLES

### Exemple 1

Dans un réacteur R1 on dissout 240 g de Sel de Nylon sec dans 1 L d'éthylène glycol à 100°C sous balayage d'azote.

Parallèlement, dans un réacteur R2 on introduit 1 L de Shellsol D100® commercialisé par la société Shell Chemicals que l'on préchauffe à 100°C sous balayage azote.

La solution du réacteur R1 est transférée dans le réacteur R2 : le mélange est agité à l'aide d'une turbine Rushton complétée et de 4 contre-pales droites pendant 30 minutes à une vitesse de 800 rpm à 100°C afin de réaliser une dispersion liquide liquide.

La température de consigne de la chauffe du bain thermostaté alimentant le réacteur R2 est portée à 220°C. La température de la dispersion monte de 100°C à 183°C. Un réfrigérant de type Dean-Stark permet alors de condenser les vapeurs issues du réacteur. La distillation sous pression atmosphérique est arrêtée au bout de 60 minutes. Le mélange réactionnel du réacteur R2 est alors refroidi en ajoutant progressivement de l'hydrocarbure froid à l'aide d'une ampoule de coulée. La maîtrise de la température de la masse réactionnelle s'effectue par petits ajouts d'hydrocarbure froid dans le réacteur R2. Ce mode de refroidissement permet d'éviter la prise en masse des gouttelettes de polymère lors de leur solidification.

Lorsque la température du mélange réactionnel du réacteur R2 atteint une valeur de 160°C, le mélange est transféré dans un réacteur R3. La phase dense décante au fond du réacteur. Cette phase dense est mélangée à 1 L d'éthanol pur dans un bécher, filtrée, séchée sous vide avec balayage azote.

La poudre blanche fluide obtenue se compose de particules de polymère présentant une forme sphérique au microscope électronique à balayage, un degré de polymérisation moyen en nombre égal à 13 et un diamètre médiant de particule mesuré par granulométrie laser égal à 11 microns.

### Exemple 2

Dans un réacteur R1, on dissout 470 g de Sel de Nylon sec dans 0,5 L d'eau à 50°C sous balayage d'azote. La solution s'élève à une température de 78°C. à 50°C sous balayage azote : l'exothermie de la réaction de salification permet à la solution de s'élever à une température de 78°C. Parallèlement, dans un réacteur R4 on introduit 1 L de Shellsol D100® que l'on préchauffe à 80°C sous balayage azote.

La solution du réacteur R1 est transférée dans le réacteur R4 : le mélange est agité à l'aide d'une turbine Rushton complétée et de 4 contre-pales droites pendant 30 minutes à une vitesse de 800 rpm à 80°C afin de réaliser une dispersion liquide liquide.

La température de consigne du circuit de chauffage du réacteur R4 est portée progressivement de 120 à 155 °C de façon à concentrer le Sel de Nylon à environ 72%. Lorsque la température du mélange réactionnel atteint 140°C, La température de consigne du circuit de chauffage du réacteur R4 est portée à 240°C. Lorsque la pression atteint la valeur de 18,5 bar absolus, la température de consigne du circuit de chauffage du réacteur R4 est portée progressivement à 260°C. L'ouverture de la vanne de distillation du réacteur R4 permet de réguler la pression à l'intérieur de l'autoclave.

Lorsque la température du mélange réactionnel atteint la valeur de 250°C, la température de consigne du circuit de chauffage du réacteur R4 est portée progressivement de 260°C à 200°C. La pression dans le réacteur est alors progressivement diminuée jusqu'à la pression atmosphérique, de façon contrôlée. A ce stade, un prélèvement montre qu'après refroidissement, lavage et séchage, les particules présentent une morphologie sphérique au microscope électronique à balayage, un degré de polymérisation moyen en nombre égal à 45 et un diamètre médiant de particule mesuré par granulométrie laser égal à 9 microns.

Le degré de polymérisation moyen en nombre des particules est alors augmenté par polycondensation en phase solide dans l'hydrocarbure où la température est régulée à 190°C pendant 1 h30. Le contenu du réacteur R4 est ensuite déversé dans le réacteur R3.

La température atteint 125°C dans le réacteur R3, la phase dense décantant au fond du réacteur. Cette phase dense est mélangée à 1,5 L d'éthanol pur dans un bécher, filtrée, séchée sous vide avec balayage azote.

La poudre fluide de couleur blanche obtenue se compose de particules de polymère présentant une forme sphérique au microscope électronique à balayage, des groupements réactionnels résiduels amines de 72 meq/kg et carboxyliques de 107 meq/kg, ainsi qu'un diamètre médiant de particule mesuré par granulométrie laser égal à 10 microns.

Cette méthode permet ainsi la fabrication de poudre de Polyamide 6,6 de morphologie et degré de polymérisation moyen en nombre (donc de fonctionnalité résiduelle) contrôlés dans des conditions de procédés, notamment de température, relativement douces par rapport aux conditions usuelles de polycondensation du Polyamide 6,6 en milieu fondu.

## Revendications

1. Procédé de préparation de particules sphériques à base de polyamide de diamètre moyen inférieur à 1 mm, comprenant les étapes suivantes :
a) réaliser une dispersion d'un premier liquide comprenant des monomères du polyamide, dans un deuxième liquide inerte
b) polymériser les monomères par polycondensation et/ou polyaddition par chauffage du milieu réactionnel et maintien du chauffage à une température inférieure à la température de fusion du polyamide de degré de polymérisation souhaité
c) éventuellement décomprimer le milieu réactionnel jusqu'à la pression atmosphérique
d) éventuellement refroidir progressivement le milieu réactionnel
e) récupérer les particules

2. Procédé selon la revendication 1, **caractérisé en ce que** le premier liquide est constitué de monomères du polyamide

3. Procédé selon la revendication 1 ou 2, **caractérisé en ce que** le premier liquide comprend des monomères fondus ou une solution de monomères dans un solvant

4. Procédé selon la revendication 3, **caractérisé en ce que** le solvant est l'eau

5. Procédé selon l'une des revendications précédentes, **caractérisé en ce que** les monomères sont choisis parmi le caprolactame, l'acide adipique et l'hexaméthylène diamine

6. Procédé selon l'une des revendications précédentes, **caractérisé en ce que** le deuxième liquide présente une température d'ébullition supérieure à 150°C à pression atmosphérique

7. Procédé selon l'une des revendications précédentes, **caractérisé en ce que** le deuxième liquide est un hydrocarbure aliphatique ou un mélange d'hydrocarbures aliphatiques

8. Procédé selon l'une des revendications précédentes, **caractérisé en ce que** le rapport entre le volume du premier liquide et le volume du deuxième liquide est supérieur ou égal à 0.5, de préférence supérieur ou égal à 0.75

9. Procédé selon l'une des revendications précédentes, **caractérisé en ce** la pression lors de l'étape b) est comprise entre 1 et 20 bars

10. Procédé selon l'une des revendications précédentes, **caractérisé en ce que** la température lors de l'étape b) est supérieure ou égale à 150°C

11. Procédé selon l'une des revendications précédentes, **caractérisé en ce qu'**un azéotrope du deuxième liquide, du solvant des monomères du premier liquide et du sous-produit de polycondensation est distillé lors de l'étape b)

12. Procédé selon l'une des revendications précédentes, **caractérisé en ce que** la durée de l'étape b) est comprise entre 10 et 60 minutes

13. Procédé selon l'une des revendications précédentes, **caractérisé en ce que** la température lors de l'étape c) est inférieure à la température de fusion du polyamide de degré de polymérisation souhaité

14. Procédé selon l'une des revendications précédentes, **caractérisé en ce qu'**il comprend une étape f) de lavage des particules sphériques de polyamide

15. Procédé selon l'une des revendications précédentes, **caractérisé en ce qu'**il comprend une étape g) de séchage des particules sphériques de polyamide

16. Procédé selon l'une des revendications précédentes, **caractérisé en ce que** les étapes a) à g) sont successives

17. Procédé selon l'une des revendications précédentes, **caractérisé en ce que** les particules sphériques présentent un diamètre moyen inférieur à 100 µm

18. Procédé selon la revendication 17, **caractérisé en ce que** les particules sphériques présentent un diamètre moyen inférieur ou égal à 30 µm, avantageusement inférieur ou égal à 10 µm, de préférence inférieur ou égal à 5 µm.

## Claims

1. A process for preparing spherical particles based on polyamide with a mean diameter of less than 1 mm, comprising the following steps:
a) preparing a dispersion of a first liquid comprising polyamide monomers, in a second inert liquid
b) polymerizing the monomers by polycondensation and/or polyaddition by heating the reaction medium and maintaining the heating at a temperature below the melting point of the polyamide with the desired degree of polymerization
c) optionally decompressing the reaction medium to atmospheric pressure
d) optionally gradually cooling the reaction medium
e) recovering the particles.

2. Process according to Claim 1, **characterized in that** the first liquid consists of polyamide monomers.

3. Process according to Claim 1 or 2, **characterized in that** the first liquid comprises molten monomers or a solution of monomers in a solvent.

4. Process according to Claim 3, **characterized in that** the solvent is water.

5. Process according to one of the preceding claims, **characterized in that** the monomers are chosen from caprolactam, adipic acid or hexamethylenediamine.

6. Process according to one of the preceding claims, **characterized in that** the second liquid has a boiling point greater than 150°C at atmospheric pressure.

7. Process according to one of the preceding claims, **characterized in that** the second liquid is an aliphatic hydrocarbon or a mixture of aliphatic hydrocarbons.

8. Process according to one of the preceding claims, **characterized in that** the ratio between the volume of the first liquid and the volume of the second liquid is greater than or equal to 0.5, preferably greater than or equal to 0.75.

9. Process according to one of the preceding claims, **characterized in that** the pressure during step b) is between 1 and 20 bar.

10. Process according to one of the preceding claims, **characterized in that** the temperature during step b) is greater than or equal to 150°C.

11. Process according to one of the preceding claims, **characterized in that** an azeotrope of the second liquid, of the solvent for the monomers of the first liquid and of the by-product of polycondensation is distilled during step b).

12. Process according to one of the preceding claims, **characterized in that** the duration of step b) is between 10 and 60 minutes.

13. Process according to one of the preceding claims, **characterized in that** the temperature during step c) is less than the melting point of the polyamide with the desired degree of polymerization.

14. Process according to one of the preceding claims, **characterized in that** it comprises a step f) for washing the spherical polyamide particles.

15. Process according to one of the preceding claims, **characterized in that** it comprises a step g) for drying the spherical polyamide particles.

16. Process according to one of the preceding claims, **characterized in that** steps a) to g) are successive.

17. Process according to one of the preceding claims, **characterized in that** the spherical particles have a mean diameter of less than 100 µm.

18. Process according to Claim 17, **characterized in that** the spherical particles have a mean diameter of less than or equal to 30 µm, advantageously less than or equal to 10 µm, preferably less than or equal to 5 µm.

## Patentansprüche

1. Verfahren zur Herstellung von kugelförmigen Teilchen auf Polyamidbasis mit einem mittleren Durchmesser von unter 1 mm, das die folgenden Schritte umfasst:
a) das Herstellen einer Dispersion von einer ersten Flüssigkeit, die Polyamidmonomere umfasst, in einer zweiten, inerten Flüssigkeit,
b) das Polymerisieren der Monomere durch Polykondensation und/oder Polyaddition durch Erwärmen des Reaktionsmediums und Aufrechterhalten der Erwärmung auf einer Temperatur, die unter der Schmelztemperatur des Polyamids mit gewünschtem Polymerisationsgrad liegt,
c) gegebenenfalls das Dekomprimieren des Reaktionsmediums bis auf Atmosphärendruck,
d) gegebenenfalls das schrittweise Abkühlen des Reaktionsmediums, und
e) das Gewinnen der Teilchen.

2. Verfahren nach Anspruch 1, **dadurch gekennzeichnet, dass** die erste Flüssigkeit aus Polyamidmonomeren gebildet ist.

3. Verfahren nach Anspruch 1 oder 2, **dadurch gekennzeichnet, dass** die erste Flüssigkeit geschmolzene Monomere oder eine Lösung von Monomeren in einem Lösemittel umfasst.

4. Verfahren nach Anspruch 3, **dadurch gekennzeichnet, dass** das Lösemittel Wasser ist.

5. Verfahren nach einem der vorangegangenen Ansprüche, **dadurch gekennzeichnet, dass** die Monomere aus Caprolactam, Adipinsäure und Hexamethylendiamin ausgewählt sind.

6. Verfahren nach einem der vorangegangenen Ansprüche, **dadurch gekennzeichnet, dass** die zweite Flüssigkeit bei Atmosphärendruck eine Siedetemperatur von über 150 °C aufweist.

7. Verfahren nach einem der vorangegangenen Ansprüche, **dadurch gekennzeichnet, dass** die zweite Flüssigkeit ein aliphatischer Kohlenwasserstoff oder ein Gemisch aus aliphatischen Kohlenwasserstoffen ist.

8. Verfahren nach einem der vorangegangenen Ansprüche, **dadurch gekennzeichnet, dass** das Verhältnis zwischen dem Volumen der ersten Flüssigkeit und dem Volumen der zweiten Flüssigkeit gleich oder mehr als 0,5, vorzugsweise gleich oder mehr als 0,75, beträgt.

9. Verfahren nach einem der vorangegangenen Ansprüche, **dadurch gekennzeichnet, dass** der Druck in Schritt b) zwischen 1 und 20 bar beträgt.

10. Verfahren nach einem der vorangegangenen Ansprüche, **dadurch gekennzeichnet, dass** die Temperatur in Schritt b) gleich oder mehr als 150 °C beträgt.

11. Verfahren nach einem der vorangegangenen Ansprüche, **dadurch gekennzeichnet, dass** in Schritt b) ein Azeotrop der zweiten Flüssigkeit, des Lösemittels der Monomere der ersten Flüssigkeit und des Nebenprodukts der Polykondensation destilliert wird.

12. Verfahren nach einem der vorangegangenen Ansprüche, **dadurch gekennzeichnet, dass** die Dauer von Schritt b) zwischen 10 und 60 Minuten beträgt.

13. Verfahren nach einem der vorangegangenen Ansprüche, **dadurch gekennzeichnet, dass** die Temperatur in Schritt c) unter der Schmelztemperatur des Polyamids mit gewünschtem Polymerisationsgrad liegt.

14. Verfahren nach einem der vorangegangenen Ansprüche, **dadurch gekennzeichnet, dass** es einen Schritt f) des Waschens der kugelförmigen Polyamidteilchen umfasst.

15. Verfahren nach einem der vorangegangenen Ansprüche, **dadurch gekennzeichnet, dass** es einen Schritt g) des Trocknens der kugelförmigen Polyamidteilchen umfasst.

16. Verfahren nach einem der vorangegangenen Ansprüche, **dadurch gekennzeichnet, dass** die Schritte a) bis g) aufeinander folgen.

17. Verfahren nach einem der vorangegangenen Ansprüche, **dadurch gekennzeichnet, dass** die kugelförmigen Teilchen einen mittleren Durchmesser von unter 100 µm aufweisen.

18. Verfahren nach Anspruch 17, **dadurch gekennzeichnet, dass** die kugelförmigen Teilchen einen mittleren Durchmesser von gleich oder unter 30 µm, vorteilhafterweise gleich oder unter 10 µm, vorzugsweise gleich oder unter 5 µm, aufweisen.
